(19) Europäisches Patentamt
European Patent Office
Office européen des brevets

(11) EP 4 722 264 A1

(12) **EUROPEAN PATENT APPLICATION**
published in accordance with Art. 153(4) EPC

(43) Date of publication:
**08.04.2026 Bulletin 2026/15**

(21) Application number: **24815269.6**

(22) Date of filing: **20.05.2024**

(51) International Patent Classification (IPC):
***C08F 228/06*** *(2006.01)*

(52) Cooperative Patent Classification (CPC):
**C08F 228/06**

(86) International application number:
**PCT/JP2024/018488**

(87) International publication number:
**WO 2024/247785 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.06.2023 JP 2023091069**

(71) Applicant: **Unimatec Co., Ltd.**
**Tokyo 105-0012 (JP)**

(72) Inventor: **SAITO, Satoru**
**Kitaibaraki-shi, Ibaraki 319-1593 (JP)**

(74) Representative: **Kraus & Lederer PartGmbB**
**Thomas-Wimmer-Ring 15**
**80539 München (DE)**

# (54) METHOD FOR USING PHENOTHIAZINE DERIVATIVE COMPOUND

(57) A method for using a phenothiazine derivative compound represented by the general formula:

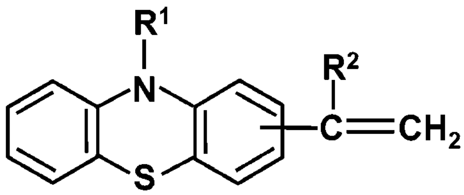

〔I〕

($R^1$ : a monovalent aliphatic hydrocarbon group having 1 to 10 carbon atoms, $R^2$ : a hydrogen atom or a methyl group), to prevent the oxidative degradation of a synthetic polymer material produced by the addition polymerization of a polymerizable unsaturated monomer, by copolymerizing the phenothiazine derivative compound [I]-with the constituting polymerizable unsaturated monomer during the production of the synthetic polymer material. Such compounds are capable of radical copolymerization with various polymerizable unsaturated monomers because the radical polymerization inhibitory effect specific to phenothiazine compounds is reduced.

EP 4 722 264 A1

## Description

TECHNICAL FIELD

The present invention relates to a method for using a phenothiazine derivative compound. More particularly, the present invention relates to a method for using a phenothiazine derivative compound by copolymerizing it with a polymerizable unsaturated monomer that constitutes a synthetic polymer material produced by addition polymerization, for the purpose of stabilizing the synthetic polymer material against oxidative degradation.

BACKGROUND ART

Fossil resources as raw materials, various synthetic polymer materials, as typified by synthetic rubber and synthetic resin, are produced and used. Such materials have permeated in every corner of the economic society, providing great convenience and benefits to our lives.

Such synthetic polymer materials may lose their original physical properties and functions over time due to oxidative degradation caused by the effects of various factors, such as heat, light, oxygen, and ozone, either individually or in combination. In order to prevent this, antioxidants are added in the production and molding processes. For example, some types of synthetic polymer materials are produced through processes, such as polymerization of their constituent monomers, recovery of unreacted monomers, removal of the polymerization medium, coagulation, drying, and granulation. Antioxidants are added in advance to prevent the alteration of the polymer materials due to thermal history in the drying and granulation processes. Usable antioxidants are phenol-based or amine-based antioxidants, and the former antioxidants with a low molecular weight are used particularly when hue and appearance are important.

In addition, when synthetic polymer materials molded into members of desired shape are used under severe conditions, such as high temperatures, in order to prevent functional decline due to thermal oxidative degradation, antioxidants are newly added in advance at the molding stage. Phenol-based or amine-based antioxidants are used as antioxidants. In particular, those with a relatively high molecular weight tend to be used to prevent volatilization or elution into the external environment. In general, phenol-based antioxidants are often used for resinous polymer materials, and amine-based antioxidants are often used for elastomeric polymer materials.

PRIOR ART DOCUMENT

PATENT DOCUMENT

Patent Document 1 : JP-A-4-264106
Patent Document 2 : JP-A-5-230132
Patent Document 3 : JP-A-2009-209268

NON-PATENT DOCUMENTS

Non-Patent Document 1 : Rubber Chem.Technol., Vol. 45, pp. 204 (1972)
Non-Patent Document 2 : Rubber Chem.Technol., Vol. 46, pp. 106 (1973)
Non-Patent Document 3 : Rubber Chem.Technol., Vol. 52, pp. 883 (1979)
Non-Patent Document 4 : Organic Letters, Vol. 23, pp. 4564 (2021)
Non-Patent Document 5 : Energy Environ.Sci., Vol. 10, pp. 2334-2341 (2017)
Non-Patent Document 6 : Macromolecules, Vol. 20, pp. 978 (1987)
Non-Patent Document 7: Russian Journal of applied chem., Vol. 76, pp. 1327 (2003)

OUTLINE OF THE INVENTION

PROBLEM TO BE SOLVED BY THE INVENTION

One of the problems in stabilizing synthetic polymer materials against oxidative degradation is the need for two rounds of addition of antioxidants in the production and molding processes, as well as the associated equipment and costs. In addition, for antioxidants that are feared to be harmful to human health, there are problems such as occupational safety

and health measures are required to prevent their exposure when they are added.

Moreover, at the stage of using polymer material molded members, there are problems such as appearance defects due to the surface transfer of antioxidants, volatilization of antioxidants to the outside by heat, and loss of the original functions of antioxidants due to the extraction thereof by water, fats and oils, solvents, or the like. Further, if polymer material molded members are in direct contact with foods etc., or used for medical components, care should be taken to ensure that the elution amount of the antioxidant is acceptable for health. Moreover, for example, in the case of large molded members, such as car tires, a large amount of antioxidant may be volatilized or eluted into the external environment, which is undesirable from the viewpoint of environmental preservation.

From this viewpoint, attempts have been examined to reduce the cost associated with the addition of antioxidants and to suppress the external elution and volatilization of antioxidants during use, by chemically bonding the antioxidants to synthetic polymer materials.

For example, in the case of elastomeric polymer materials, attempts have been made to chemically bond antioxidants to the polymer chains (Patent Documents 1 to 3 and Non-Patent Documents 1 to 3). However, these methods are not practical in terms of production cost due to the additional need for the denaturation process. In addition, it is hard to say that the antioxidant having a polymerizable unsaturated group described in Non-Patent Document 2 is versatile.

The method for producing a phenothiazine derivative compound [I], whose use is proposed in the present invention, is well known (Non-Patent Documents 4 and 5). Further, the production of its homopolymer and a copolymer with methyl methacrylate, and its redox properties are also known (Non-Patent Document 6).

In connection with the present invention, Non-Patent Document 7 describes the production of a homopolymer of 2-ethenyl-10H-phenothiazine and its function as a polymeric antioxidant.

However, none of the prior art documents refers to stabilizing effects against oxidative degradation, i.e., efficacy as an antioxidant, when the compound [I] is copolymerized with a polymerizable unsaturated monomer.

MEANS FOR SOLVING THE PROBLEM

For the purpose of solving the above problems, the present inventors propose a method for using a phenothiazine-based derivative compound represented by the general formula:

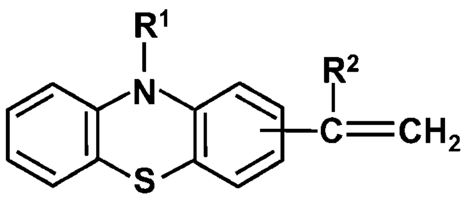

〔I〕

(wherein $R^1$ is a monovalent aliphatic hydrocarbon group having 1 to 10 carbon atoms, $R^2$ is a hydrogen atom or a methyl group), as an antioxidant to prevent the oxidative degradation of a synthetic polymer material produced by the addition polymerization of a polymerizable unsaturated monomer, by copolymerizing the compound [I] with the constituting polymerizable unsaturated monomer during the production of the synthetic polymer material.

EFFECT OF THE INVENTION

Such compounds are capable of radical copolymerization with various polymerizable unsaturated monomers because the radical polymerization inhibitory effect specific to phenothiazine compounds is reduced. In addition, the hydrogen atom at position 10, which is active against basic compounds, such as alkyl lithium compounds, is replaced by an aliphatic hydrocarbon group, thereby substantially avoiding hydrogen abstraction reactions. Accordingly, anionic copolymerization with various polymerizable unsaturated monomers, such as diene-based monomers and vinyl-based monomers, becomes possible. For the same reason, since the deactivation of cationic polymerization catalysts and coordination polymerization catalysts can be prevented, cationic or coordination polymerization with various polymerizable unsaturated monomers becomes possible.

In the production process of a synthetic polymer material, copolymerization of the phenothiazine derivative compound [I] in an amount less than the amount of a conventional antioxidant can stabilize the synthetic polymer material against oxidative degradation. As a result, the addition of new antioxidants in the production and molding processes is not necessary, or the use amount thereof can be significantly reduced.

Further, at the use stage of molded members produced from synthetic polymer materials, it is possible to prevent problems, such as appearance defects associated with surface transfer of antioxidants, contamination of other members in contact with the molded members, volatilization or elution of antioxidants into the external environment, and extraction by liquid media, such as fats and oils or organic solvents. As a result, it becomes possible to achieve safe use and long life of

polymer material molded members in various service environments.

Synthetic polymer materials in which the phenothiazine derivative compound [I] is copolymerized have reduced loss of antioxidant components over time and do not require or greatly reduce the need for the addition of new antioxidants when the synthetic polymer materials are reused. Therefore, this technology is useful from the viewpoint of recent plastic reuse.

This technology is also useful from the viewpoint of environmental preservation, since the release of antioxidant components from large molded members, such as car tires, into the external environment is reduced.

BRIEF DESCRIPTION OF DRAWINGS

Fig. 1: A schematic diagram of the rate of change in strength at break change over time of acrylic rubber crosslinked product at 190°C (Example 16: **-●-,** Comparative Example 5: --●--, Comparative Example 6: --A--, Comparative Example 7: --♦--; Figs 1 to 2 common).

Fig. 2: A schematic diagram of the rate of change in elongation at break change over time of acrylic rubber crosslinked product at 190°C.

Fig. 3: A comparison of the rate of change in elongation at break after an air heating aging test (175°C, 300 hours) (white bar) and the rate of change in elongation at break when the air heating aging test (175°C, 300 hours) was performed after dipping in IRM 903 oil (150°C, 168 hours) (black bar) in Examples 17 to 19 and Comparative Examples 8 and 9.

EMBODIMENTS FOR CARRYING OUT THE INVENTION

The present invention is a method for using a phenothiazine derivative compound represented by the general formula:

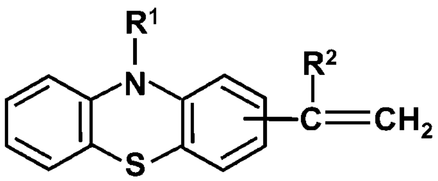

〔I〕

(wherein $R^1$ is a monovalent aliphatic hydrocarbon group having 1 to 10 carbon atoms, $R^2$ is a hydrogen atom or a methyl group. Specifically, the present invention relates to a method for using a phenothiazine derivative compound [I] by copolymerizing the phenothiazine derivative compound [I] with a polymerizable unsaturated monomer that constitutes a synthetic polymer material produced by addition polymerization, in order to prevent the oxidative degradation of the synthetic polymer material.

Specific examples of the $R^1$ include a methyl group, an ethyl group, an n-propyl group, an n-butyl group, an n-pentyl group, an n-hexyl group, an n-heptyl group, an n-octyl group, a 2-ethylhexyl group, an n-nonyl group, an isopropyl group, a 2-butyl group, a 2-pentyl group, a 3-pentyl group, a 2-hexyl group, a 3-hexyl group, a 2-heptyl group, a 3-heptyl group, a 4-heptyl group, a 2-octyl group, a 3-octyl group, a 4-octyl group, a tertiary butyl group, a 1,1-dimethyl-1-propyl group, a 1,1-dimethyl-1-butyl group, a 1,1-dimethyl-1-pentyl group, a 1,1-dimethyl-1-hexyl group, a 3-methyl-3-pentyl group, a 3-ethyl-3-pentyl group, a 3-methyl-3-hexyl group, and the like, or and a cyclopropyl group, a cyclobutyl group, a cyclopentyl group, a cyclohexyl group, a cycloheptyl group, a 1-methyl-1-cyclopentyl group, a 1-methyl-1-cyclohexyl group, a 1-adamantyl group, and the like.

Specific examples of the phenothiazine derivative compound [I] include 2-ethenyl-10-methyl-10H-phenothiazine, 2-(1-methylethenyl)-10-methyl-10H-phenothiazine, 3-ethenyl-10-methyl-10H-phenothiazine, 3-(1-methylethenyl)-10-methyl-10H-phenothiazine, and the like.

The method for producing the phenothiazine derivative compound [I] is not particularly limited, and this compound can be produced by using inexpensive diphenylamine or 10H-phenothiazine as a starting material. For example, Non-Patent Documents 4 and 5 describe methods for producing 2-(1-methylethenyl)-10-methyl-10H-phenothiazine and 3-ethenyl-10-methyl-10H-phenothiazine, respectively.

When the phenothiazine derivative compound [I] is copolymerized with a polymerizable unsaturated monomer, the phenothiazine derivative compound [I] is used in an amount of about 0.001 to 2.0 parts by weight, preferably about 0.01 to 1.0 part by weight, based on 100 parts by weight of the monomer mixture. If the phenothiazine derivative compound [I] is used at a ratio of less than this range, no sufficient antioxidant effect can be expected. In contrast, if the phenothiazine

derivative compound [I] is used at a ratio of greater than this range, no improvement in the antioxidant effect can be expected, which is uneconomical.

The synthetic polymer material as mentioned in the present invention is one produced by the addition polymerization of a polymerizable unsaturated monomer, and the type thereof is not particularly limited.

The physical form of the synthetic polymer material may be resinous, elastomeric, or viscous liquid.

In the production of the synthetic polymer material, a radical polymerization method, an anionic polymerization method, a cationic polymerization method, a coordination polymerization method, or the like can be used in terms of the active species of the polymerization reaction, and a solution polymerization method, a bulk polymerization method, an emulsion polymerization method, a suspension polymerization method, a gas phase polymerization method, or the like can be used in terms of the phase state of the polymerization reaction. Polymerization methods suitable for the type and application of each synthetic polymer material are used as appropriate.

The polymerizable unsaturated monomer constituting the synthetic polymer material is not particularly limited. A homopolymer produced from one type of polymerizable unsaturated monomer or a copolymer produced from multiple polymerizable unsaturated monomers can be used.

The polymerization form of the copolymer can be a random copolymer, an alternating polymer, a block copolymer, or a graft copolymer.

Examples of the polymerizable unsaturated monomer include liner olefins having 2 to 10 carbon atoms, such as ethylene, propylene, 1-butene, 1-pentene, 4-methylpentene and isobutylene; cyclic olefins, such as cyclopentene and cyclohexene; diene-based monomers, such as 1,3-butadiene, isoprene, chloroprene, 2,3-dimethyl-1,3-butadiene, 1,3-pentadiene, 1,3-hexadiene, 1,3-heptadiene and 2-phenyl-1,3-butadiene; aromatic vinyl-based monomers, such as styrene, α-methylstyrene, 3-methylstyrene, 4-methylstyrene, 1-vinylnaphthalene, 2-vinylnaphthalene, 2,4-dimethylstyrene, 2,4-diisopropylstyrene, 4-ethylstyrene, 4-tert-butylstyrene and 1,4-divinylbenzene; nitrile group-containing unsaturated monomers, such as acrylonitrile and methacrylonitrile; chlorine-containing unsaturated monomers, such as vinyl chloride and vinylidene chloride; alkyl vinyl ether monomers, such as methyl vinyl ether and ethyl vinyl ether; alkyl (meth) acrylate monomers, such as methyl (meth)acrylate, ethyl (meth)acrylate, n-propyl (meth)acrylate, and n-butyl (meth) acrylate; alkoxyalkyl (meth)acrylate monomers, such as methoxyethyl (meth)acrylate and methoxypropyl (meth)acrylate; aralkyl (meth)acrylate monomers, such as benzyl (meth)acrylate; vinyl acetate; and the like. (Meth)acrylate refers to acrylate or methacrylate.

In addition to the main polymerizable unsaturated monomer that constitutes the synthetic polymer material, a small amount of a polymerizable unsaturated monomer having a reactive group may be further copolymerized, in order to impart functions, such as adhesion and crosslinking properties. Examples of the reactive group include a vinyl group, an epoxy group, an acryloyl group, an isocyanate group, a hydroxyl group, a chlorinated alkyl group, a carboxyl group, and the like.

Specific examples of the synthetic polymer material in which the phenothiazine derivative compound [I] can be copolymerized in the molecule include polyethylene, polypropylene, poly-4-methylpentene, ethylene-propylene copolymer, 1-butene-propylene copolymer, polystyrene, acrylonitrile-styrene copolymer, methyl methacrylate-styrene copolymer, methacrylic acid-styrene copolymer, butadiene rubber acrylonitrile-styrene graft copolymer, styrene-butadiene rubber acrylonitrile-styrene graft copolymer, poly 1,3-butadiene, isobutylene-isoprene copolymer, 1,3-butadiene-isobutylene copolymer, polyisoprene, polychloroprene, 1,3-butadiene-styrene copolymer, polyvinyl chloride, polyvinylidene chloride, polymethyl methacrylate, polyethyl acrylate, poly n-butyl acrylate, n-butyl acrylate-ethyl acrylate copolymer, ethylene-vinyl acetate copolymer, ethylene-methyl acrylate copolymer, ethylene-ethyl acrylate copolymer, n-butyl acrylate-ethyl acrylate-ethylene copolymer, and the like.

## EXAMPLES

Next, the present invention will be described in detail with reference to Examples. The present invention, including its effects, is not limited to the Examples.

### Reference Example 1

- Production of phenothiazine derivative compound [I-A] -

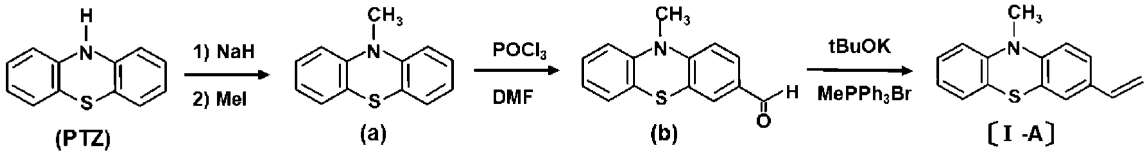


[First step] [PTZ] → (a):

In a 5 L five-necked flask equipped with a stirrer, a thermometer, a dropping funnel, and nitrogen gas inlet and outlet tubes, 2.0 L of sufficiently dehydrated N,N-dimethylformamide was placed, and the temperature in the system under nitrogen atmosphere was cooled to 10°C or less. 103.4 g (2.59 mol) of sodium hydride (purity: 60%) was added, followed by stirring for 10 minutes. Then, while keeping the system temperature at 10°C or less, 312.3 g (2.2 mol) of phenothiazine [PTZ] was added in several portions, followed by reaction for 30 minutes. While keeping the system temperature at 10°C or less, 312.3 g (2.20 mol) of iodomethane was added dropwise, followed by further reaction for 1 hour. After the reaction was completed, the reaction mixture was added to 4 L of a 10% sodium chloride aqueous solution. The precipitated colorless solid was filtered off and then washed with 4 L of distilled water. After the obtained solid was dissolved in 2.5 L of warm ethyl acetate at about 50°C, the lower layer (water layer) was separated. The upper layer (organic layer) was dried over anhydrous magnesium sulfate, and then the insoluble matter was filtered off. Volatile components were distilled off from the filtrate under reduced pressure to obtain 451.4 g (crude yield: 105%) of a crude product. This was washed (degreased) with 0.7 L of isooctane, thereby obtaining 421.2 g of 10-methyl-10H-phenothiazine (a) as a slightly grayish crystalline solid (yield: 98.2%).

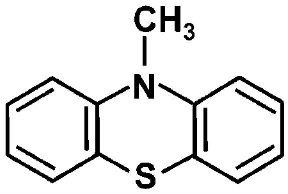

(a)

$^1$H NMR(400MHz, Acetone-d6, δ ppm) :

3.39 (s, 3H, N-C$\underline{H}_3$)
6.91-6.98 (m, 4H, Ar)
7.14 (dd, J=7.6Hz, J=1.6Hz, 2H, Ar)
7.21 (td, J=7.6Hz, J=1.6Hz, 2H, Ar)

[Second step] (a) → (b):

In a 3 L five-necked flask equipped with a stirrer, a dropping funnel, a thermometer, a gas inlet, a gas outlet, and a reflux cooling tube, 0.7 L of sufficiently dehydrated N,N-dimethylformamide was placed. While keeping the internal temperature in the system at 10°C or less under nitrogen atmosphere, 509 g (3.32 mmol) of phosphoryl chloride was added dropwise, followed by further reaction for 30 minutes. Next, 291.2 g (1.37 mmol) of the 10-methyl-10H-phenothiazine (a) obtained in the first step above was added, followed by reaction at 60°C for 17 hours. After the reaction was completed, the content was poured into 2.3 kg of a 50% sodium acetate aqueous solution cooled in an ice bath, and 194 g of sodium hydroxide was further added to adjust the pH to 6 or more. The obtained solution was allowed to stand for 2 hours while being cooled in an ice bath. The precipitated solid was filtered off and then washed with 3 L of distilled water to dissolve inorganic electrolytes. The remaining brown solid was dissolved in 1.5 L of warm ethyl acetate at about 50°C, and the lower layer (water layer) was separated, after which the organic layer was dried over anhydrous magnesium sulfate. After the insoluble matter was filtered off, volatile components were distilled off from the filtrate under reduced pressure, thereby obtaining 329.0 g (crude yield: 99.9%) of a crude product as a reddish brown oily substance. The crude product was dissolved in about 1 L of ethyl acetate, and passed through a silica gel (carrier: Wakogel C300) column to remove low Rf components. Volatile components were distilled off from the eluate under reduced pressure, thereby obtaining 321.6 g (yield: 97.6%) of a yellow solid. Further, the solid was recrystallized with 320 ml of ethyl acetate, thereby obtaining 308.2 g (yield: 93.6%) of 10-methyl-10H-phenothiazine-3-carbaldehyde (b) as yellow crystals.

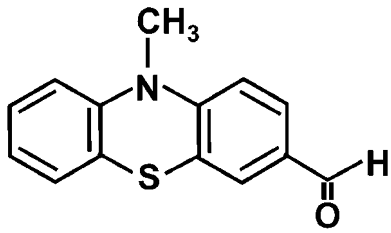

(b)

$^1H$ NMR(400MHz, Acetone d6, δ ppm) :

3.49 (s, 3H, N-C$\underline{H}_3$)
7.00-7.06 (m, 2H, Ar)
7.10 (d, J=8.4Hz, 1H, Ar)
7.15-7.19 (m, 1H, Ar)
7.22-7.28 (m, 1H, Ar)
7.61 (d, J=1.6Hz, 1H, Ar)
7.75 (dd, J=8.4Hz, J=1.6Hz, 1H, Ar)
9.85 (s, 1H, -C$\underline{H}$O)

[Third step] (b) → [I-A]:

In a 5 L five-necked flask equipped with a stirrer, a magnetic stirrer, a thermometer, a gas inlet tube, and a gas outlet tube, 2.3 L of tetrahydrofuran was placed, and the internal temperature was cooled to 10°C or less while the inside of the reaction container was replaced with nitrogen. 175.0 g (1.56 mmol) of potassium tert-butoxide and then 557.3 g (1.56 mmol) of methyltriphenylphosphonium bromide were added, followed by reaction for 30 minutes. 313.7 g (1.30 mol) of the compound (b) was added thereto, followed by reaction at -10 to 40°C for 1 hour, thereby obtaining a reaction mixture. The reaction mixture was added to 1.7 L of a 10% sodium chloride aqueous solution to stop the reaction. While the organic layer was recovered, the water layer was extracted with ethyl acetate, and this was mixed with the recovered organic layer. 0.35 g of p-methoxyphenol was added to this mixture, followed by drying over anhydrous magnesium sulfate, the insoluble matter was then filtered off, and volatile components were distilled off from the filtrate under reduced pressure to obtain 718.4 g of a pale yellow solid. This solid was ground into a powder in a mortar. After the powdery pale yellow solid was dissolved in 2.1 L of ethanol, a small amount of insoluble matter was filtered off, after which the filtrate was left at 5°C or less overnight to crystallize [I-A]. The amount of the crystallized yellow crystals was 286.3 g (yield: 92.0%). Further, the same procedure was carried out on 286.3 g of the crystallized yellow crystals using 3.3 L of ethanol, thereby obtaining 259.2 g (yield: 83.3%) of [I-A] as pale yellow crystals.

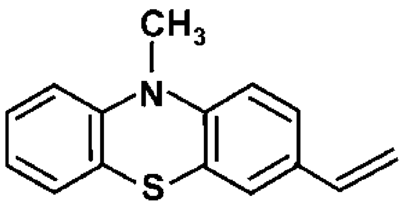

[I-A]

Melting point 102°C
$^1H$ NMR(400MHz, $CDCl_3$, δ ppm) :

3.37 (s, 3H, N-C$\underline{H}_3$)
5.14 (d, J=10.8Hz, 1H, C$\underline{H}_2$=CH-PTZ
(trans against the phenothiazine group))
5.61 (d, J=17.6Hz, 1H, C$\underline{H}_2$=CH-PTZ
(cis against the phenothiazine group))
6.59 (dd, J=10.8Hz, 17.6Hz, 1H, $CH_2$=C$\underline{H}$-PTZ)
6.75 (d, J=8.4Hz, 1H, Ar)
6.81 (d, J=9.2Hz, 1H, Ar)
6.92 (td, J=7.6Hz, 1.2Hz, 1H, Ar)
7.11-7.23 (m, 4H, Ar)

Reference Example 2

- Production of phenothiazine derivative compound [I-B] -

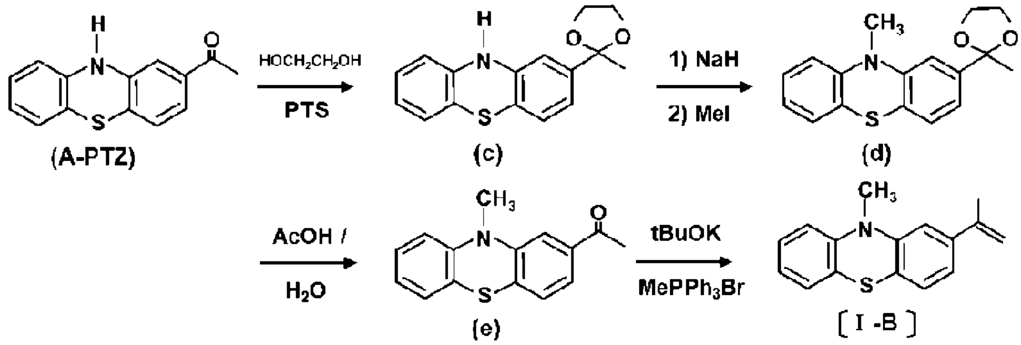


[First step] (A-PTZ) → (c):

In a 1 L four-necked flask equipped with a magnetic stirrer, a thermometer, nitrogen gas inlet tube, outlet tube, and a reflux cooling tube, 16.4 g (68.0 mmol) of 2-acetylphenothiazine (A-PTZ), 400 ml of toluene, 36 g of ethylene glycol, and 0.70 g of p-toluenesulfonic acid monohydrate were placed and refluxed under nitrogen atmosphere for 10 hours. The reaction mixture was added to 600 ml of a 10% sodium chloride aqueous solution. This was extracted with ethyl acetate, the organic layer was dried over anhydrous magnesium sulfate, and the insoluble matter was then filtered off. Volatile components were distilled off from the filtrate under reduced pressure to obtain 16.3 g (crude yield: 84%) of a compound (c) as a brownish-red solid.

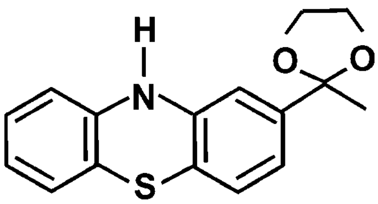

(c)

[Second step] (c) → (d):

In a 500 ml four-necked flask equipped with a magnetic stirrer, a thermometer, a dropping funnel, and nitrogen gas inlet and outlet tubes, 200 ml of sufficiently dehydrated N,N-dimethylformamide was placed, and the temperature in the system under nitrogen atmosphere was cooled to 10°C or less. 4.6 g (115 mmol) of sodium hydride (purity: 60%) was added, followed by stirring for 10 minutes. Then, while keeping the system temperature at 10°C or less, 16.3 g (57.1 mmol) of compound (c) was added, followed by reaction for 30 minutes. While keeping the system temperature at 10°C or less, 12.2 g (86 mmol) of iodomethane was added dropwise, followed by further reaction for 1 hour. After the reaction was completed, the reaction mixture was added to 600 ml of a 10% sodium chloride aqueous solution. After this was extracted with ethyl acetate, the upper layer (organic layer) was dried over anhydrous magnesium sulfate, and the insoluble matter was then filtered off. Volatile components were distilled off from the filtrate under reduced pressure to obtain 17.2 g (crude yield from the compound (c): 101%) of a compound (d) as a yellow solid.

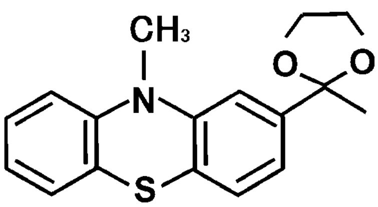

(d)

[Third step] (d) → (e):

In a 500 ml four-necked flask equipped with a magnetic stirrer and a thermometer, 17.2 g of the compound (d), 40 ml of distilled water, and 160 ml of acetic acid were placed, followed by reaction at 90°C for 2 hours. The reaction mixture was added to 600 ml of a 10% sodium chloride aqueous solution. This was extracted with ethyl acetate, the organic layer was dried over anhydrous magnesium sulfate, and the insoluble matter was then filtered off. Volatile components were distilled off from the filtrate under reduced pressure to obtain 15.4 g of a compound (e) as a brownish-red liquid (crude yield from the compound (c): 106%).

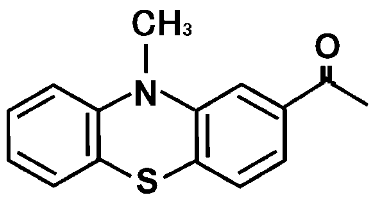

(e)

[Fourth step] (e) → [I-B]:

In a 500 ml four-necked flask equipped with a magnetic stirrer, a thermometer, a gas inlet tube, and a gas outlet tube, 150 ml of tetrahydrofuran was placed, and the internal temperature was cooled to 10°C or less while the inside of the reaction container was replaced with nitrogen. 8.3 g (74.0 mmol) of potassium tert-butoxide and then 25.6 g (74.2 mmol) of methyltriphenylphosphonium bromide were added, followed by reaction for 30 minutes. 15.4 g (about 57.1 mmol) of the compound (e) was added thereto, followed by reaction at -10 to 40°C for 1 hour. After the reaction mixture was added to 700 ml of a 10% sodium chloride aqueous solution to stop the reaction, while the organic layer was recovered, the water layer was extracted with ethyl acetate, and this was mixed with the recovered organic layer. 0.02 g of p-methoxyphenol was added to this mixture, followed by drying over anhydrous magnesium sulfate, and the insoluble matter was then filtered off. Volatile components were distilled off from the filtrate under reduced pressure to obtain 32.2 g of a brownish-red liquid. This liquid was subjected twice to a triphenylphosphine oxide removal operation by column chromatography (stationary phase: Wakogel C300, 60 mm in diameter, L = 80 mm) using dichloromethane as the eluent. Then, volatile components were distilled off from the eluent under reduced pressure to obtain 13.0 g of a compound [I-B] as a pale yellow solid (yield from the compound (c): 90%).

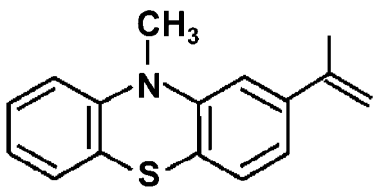

[I-B]

$^1$H NMR(400MHz, acetone-d6, δ ppm) :

2.13 (s, 3H, $CH_2=C(C\underline{H}_3)$-PTZ)
3.42 (s, 3H, $N-C\underline{H}_3$)
5.08 (m, 1H, $C\underline{H}_2=C(CH_3)$-PTZ
(trans against the phenothiazine group))
5.41 (m, 1H, $C\underline{H}_2=C(CH_3)$-PTZ
(cis against the phenothiazine group))
6.91-7.23 (m, 7H, Ar)

Example 1

In a separable flask equipped with a thermometer, a stirrer, a nitrogen gas inlet tube, and a Dimroth cooling tube, the following components were charged.

| | |
|---|---|
| Water | 187 parts by weight |
| Sodium lauryl sulfate | 2 parts by weight |

(continued)

| | |
|---|---|
| Polyoxyethylene lauryl ether | 2 parts by weight |

Charged monomer mixture

| | |
|---|---|
| Ethyl acrylate [EA] | 98.2 parts by weight |
| Ethyl acrylate [EA] | 97.9 parts by weight |
| Mono n-butyl fumarate [MBF] | 1.6 parts by weight |
| Compound (a) [I-A] of Reference Example 1 | 0.5 parts by weight |

After oxygen was sufficiently removed from the system by replacement with nitrogen gas, the following components were added.

| | |
|---|---|
| Sodium formaldehyde sulfoxylate (Rongalite, produced by FUJIFILM Wako Pure Chemical Corporation) | 0.008 parts by weight |
| Tertiary butyl hydroperoxide (Perbutyl H-69, produced by NOF Corporation) | 0.0047 parts by weight |

Then, a polymerization reaction was initiated at room temperature, and the reaction was continued until the polymerization conversion rate reached 90% or more. The obtained aqueous latex was coagulated with a 10 % sodium sulfate aqueous solution, followed by water washing and drying, thereby obtaining an acrylic rubber A. The Mooney viscosity $PML_{1+4}$ (100°C) of the obtained acrylic rubber A was 30.

The molar fraction compositions of compound [I-A] and EA+MBF were 0.20 mol% and 99.80 mol%, respectively,

determined by $^1$H-NMR (400 MHz, Acetone d6, $\delta$ ppm) using the following formulas.

$\alpha$: integral value of signal at 6.5-7.5 ppm

$\beta$: integral value of signal at 3.2-5.0 ppm

$$\text{Compound [I-A] (mol\%)} = 200 \text{ x } \alpha/(2\alpha+7\beta)$$

$$\text{EA+MBF (mol\%)} = 100 - \text{compound [I-A]}$$

Moreover, the approximate weight fraction compositions of compound [I-A] and EA+MBF were 0.48 wt% and 99.52 wt%, respectively, determined by the following formulas.

$$\text{Compound [I-A] (wt\%)} = (\text{compound (e) (mol\%) x } 239.34 \text{ x } 100)/ [\text{compound [I-A] (mol\%) x } 239.34 + (\text{EA+MBF (mol\%)}) \text{ x } 100.8)]$$

$$\text{EA+MBF (wt\%)} = 100 - \text{compound [I-A] (wt\%)}$$

Example 2

A copolymerization reaction was performed in the same manner as in Example 1, except that the following charged monomer mixture was used, thereby obtaining acrylic rubber B. The Mooney viscosity $PML_{1+4}$ (100°C) of the obtained acrylic rubber B was 32.

Charged monomer mixture

| | |
|---|---|
| Ethyl acrylate [EA] | 98.2 parts by weight |
| Mono n-butyl fumarate [MBF] | 1.6 parts by weight |

(continued)

| | |
|---|---|
| Compound [I-A] of Reference Example 1 | 0.2 part by weight |

The molar fraction compositions of compound [I-A] and EA+MBF were 0.085 mol% and 99.915 mol%, respectively.

Moreover, the approximate weight fraction compositions of compound [I-A] and EA+MBF were 0.20 wt% and 99.80 wt%, respectively.

Example 3

A copolymerization reaction was performed in the same manner as in Example 1, except that the following charged monomer mixture was used, thereby obtaining acrylic rubber C. The Mooney viscosity $PML_{1+4}$ (100°C) of the obtained acrylic rubber C was 32.

Charged monomer mixture

| | |
|---|---|
| Ethyl acrylate [EA] | 98.3 parts by weight |
| Mono n-butyl fumarate [MBF] | 1.6 parts by weight |
| Compound [I-A] of Reference Example 1 | 0.1 parts by weight |

The molar fraction compositions of compound [I-A] and EA+MBF were 0.047 mol% and 99.953 mol%, respectively.

Moreover, the approximate weight fraction compositions of compound [I-A] and EA+MBF were 0.11 wt% and 99.89 wt%, respectively.

Comparative Example 1

A copolymerization reaction was performed in the same manner as in Example 1, except that the following charged monomer mixture was used, thereby obtaining acrylic rubber D. The Mooney viscosity $PML_{1+4}$ (100°C) of the obtained acrylic rubber D was 32.

Charged monomer mixture

| | |
|---|---|
| Ethyl acrylate [EA] | 98.4 parts by weight |
| Mono n-butyl fumarate [MBF] | 1.6 parts by weight |

Example 4

The acrylic rubbers A, B, C and D obtained in Examples 1 to 3 and Comparative Example 1 were subjected to a heating test at 100°C (50 hours, 100 hours), 150°C (3 hours), and 200°C (10 minutes) in the air, and the Mooney viscosity $PML_{1+4}$ (100°C) before and after the test and the stress relaxation factor MSR (100°C) were measured.

The results obtained are shown in the following Table 1.

Table 1

| Acrylic rubber | A | B | C | D |
|---|---|---|---|---|
| Amount of compound [I-A] charged (parts by weight) | 0.50 | 0.20 | 0.10 | 0 |
| Before test | | | | |
| $PML_{1+4}$ | 30 | 32 | 32 | 32 |
| MSR | 0.149 | 0.045 | 0.025 | 0.023 |

(continued)

| | | | | |
|---|---|---|---|---|
| After heating test at 100°C for 50 hours | | | | |
| $PML_{1+4}$ | 30 | 27 | 31 | 14 |
| MSR | 0.038 | 0.051 | 0.083 | 0.578 |
| After heating test at 100°C for 100 hours | | | | |
| $PML_{1+4}$ | 26 | 28 | 32 | 4 |
| MSR | 0.045 | 0.055 | 0.086 | 0.230 |
| After heating test at 150°C for 3 hours | | | | |
| $PML_{1+4}$ | 32 | 29 | 32 | 9 |
| MSR | 0.074 | 0.082 | 0.096 | 0.573 |
| After heating test at 200°C for 10 minutes | | | | |
| $PML_{1+4}$ | 30 | 30 | 34 | 24 |
| MSR | 0.084 | 0.038 | 0.042 | 0.515 |

Example 5

A copolymerization reaction was performed in the same manner as in Example 1, except that the following charged monomer mixture was used, thereby obtaining acrylic rubber E. The Mooney viscosity $PML_{1+4}$ (100°C) of the obtained acrylic rubber E was 35.

Charged monomer mixture

| | |
|---|---|
| Ethyl acrylate [EA] | 53.2 parts by weight |
| Butyl acrylate [BA] | 45.0 parts by weight |
| Mono n-butyl fumarate [MBF] | 1.6 parts by weight |
| Compound [I-A] of Reference Example 1 | 0.2 parts by weight |
| n-dodecyl mercaptan | 0.035 parts by weight |

The molar fraction compositions of compound [I-A] and EA+BA+MBF were 0.090 mol% and 99.910 mol%, respectively, determined by $^1$H-NMR (400 MHz, Acetone d6, $\delta$ ppm) using the following formulas.

$\alpha$: integral value of signal at 6.5-7.5 ppm
$\beta$: integral value of signal at 3.2-5.0 ppm

$$\text{Compound [I-A] (mol\%)} = 200 \times \alpha / (2\alpha + 7\beta)$$

$$\text{EA+BA+MBF (mol\%)} = 100 - \text{compound [I-A]}$$

Moreover, the approximate weight fraction compositions of compound [I-A] and EA+BA+MBF were 0.19 wt% and 99.81 wt%, respectively, determined by the following formulas.

$$\text{Compound [I-A] (wt\%)} = (\text{compound [I-A] (mol\%)} \times 239.34 \times 100) / [\text{compound [I-A] (mol\%)} \times 239.34 + (\text{EA+BA+MBF (mol\%)}) \times 110.6)]$$

$$\text{EA+BA+MBF (wt\%)} = 100 - \text{compound [I-A] (wt\%)}$$

Example 6

A copolymerization reaction was performed in the same manner as in Example 1, except that the following charged monomer mixture was used, thereby obtaining acrylic rubber F. The Mooney viscosity $PML_{1+4}$ (100°C) of the obtained acrylic rubber F was 39.

Charged monomer mixture

| | |
|---|---|
| Ethyl acrylate [EA] | 53.2 parts by weight |
| Butyl acrylate [BA] | 45.0 parts by weight |
| Mono n-butyl fumarate [MBF] | 1.6 parts by weight |
| Compound [I-B] of Reference Example 2 | 0.2 parts by weight |
| n-dodecyl mercaptan | 0.035 parts by weight |

The molar fraction compositions of compound [I-B] and EA+BA+MBF were 0.085 mol% and 99.915 mol%, respectively, determined by $^1$H-NMR (400 MHz, Acetone d6, $\delta$ ppm) using the following formulas.

$\alpha$: integral value of signal at 6.5-7.5 ppm
$\beta$: integral value of signal at 3.2-5.0 ppm

$$\text{Compound [I-B] (mol\%)} = 200 \text{ x } \alpha / (2\alpha + 7\beta)$$

$$\text{EA+BA+MBF (mol\%)} = 100 - \text{compound [I-B]}$$

Moreover, the approximate weight fraction compositions of compound [I-B] and EA+BA+MBF were 0.19 wt% and 99.81 wt%, respectively, determined by the following formulas.

$$\text{Compound [I-B] (wt\%)} = (\text{compound [I-B] (mol\%)} \text{ x } 253.37 \text{ x } 100) / [\text{compound [I-B] (mol\%)} \text{ x } 253.37 + (\text{EA+BA+MBF (mol\%)}) \text{ x } 110.6)]$$

$$\text{EA+MBF (wt\%)} = 100 - \text{compound [I-B] (wt\%)}$$

Comparative Example 2

A copolymerization reaction was performed in the same manner as in Example 1, except that the following charged monomer mixture was used, thereby obtaining acrylic rubber G. The Mooney viscosity $PML_{1+4}$ (100°C) of the obtained acrylic rubber G was 36.

| | |
|---|---|
| Ethyl acrylate [EA] | 53.4 parts by weight |
| Butyl acrylate [BA] | 45.0 parts by weight |
| Mono n-butyl fumarate [MBF] | 1.6 parts by weight |
| n-dodecyl mercaptan | 0.035 parts by weight |

Example 7

The acrylic rubbers E, F and G obtained in Examples 5, 6 and Comparative Example 2 were subjected to a heating test at 150°C (3 hours) in the air, and the Mooney viscosity $PML_{1+4}$ (100°C) before and after the test and the stress relaxation factor MSR (100°C) were measured. The results obtained are shown in the following Table 2.

Table 2

| Acrylic rubber | E | F | G |
|---|---|---|---|
| Amount of compound [I-A] charged (parts by weight) | 0.20 | 0 | 0 |
| Amount of compound [I-B] charged (parts by weight) | 0 | 0.20 | 0 |
| Before test | | | |
| $PML_{1+4}$ | 35 | 39 | 36 |
| MSR | 0.254 | 0.238 | 0.255 |
| After heating test at 150°C for 3 hours | | | |
| $PML_{1+4}$ | 37 | 41 | 19 |
| MSR | 0.249 | 0.198 | 0.505 |

Example 8

A copolymerization reaction was performed in the same manner as in Example 1, except that the following charged monomer mixture was used, thereby obtaining acrylic rubber H. The Mooney viscosity $PML_{1+4}$ (100°C) of the obtained acrylic rubber H was 26.

Charged monomer mixture

| | |
|---|---|
| Ethyl acrylate [EA] | 47.9 parts by weight |
| Butyl acrylate [BA] | 30.0 parts by weight |
| Methoxyethyl acrylate [MEA] | 20.0 parts by weight |
| Mono n-butyl fumarate [MBF] | 1.6 parts by weight |
| Compound [I-A] of Reference Example 1 | 0.5 parts by weight |

Example 9

A copolymerization reaction was performed in the same manner as in Example 1, except that the following charged monomer mixture was used, thereby obtaining acrylic rubber I. The Mooney viscosity $PML_{1+4}$ (100°C) of the obtained acrylic rubber I was 28.

Charged monomer mixture

| | |
|---|---|
| Ethyl acrylate [EA] | 48.2 parts by weight |
| Butyl acrylate [BA] | 30.0 parts by weight |
| Methoxyethyl acrylate [MEA] | 20.0 parts by weight |
| Mono n-butyl fumarate [MBF] | 1.6 parts by weight |
| Compound [I-A] of Reference Example 1 | 0.2 parts by weight |

Example 10

A copolymerization reaction was performed in the same manner as in Example 1, except that the following charged monomer mixture was used, thereby obtaining acrylic rubber J. The Mooney viscosity $PML_{1+4}$ (100°C) of the obtained acrylic rubber J was 28.

Charged monomer mixture

| | |
|---|---|
| Ethyl acrylate [EA] | 48.3 parts by weight |
| Butyl acrylate [BA] | 30.0 parts by weight |
| Methoxyethyl acrylate [MEA] | 20.0 parts by weight |
| Mono n-butyl fumarate [MBF] | 1.6 parts by weight |
| Compound [I-A] of Reference Example 1 | 0.1 parts by weight |

Comparative Example 3

A copolymerization reaction was performed in the same manner as in Example 1, except that the following charged monomer mixture was used, thereby obtaining acrylic rubber K. The Mooney viscosity $PML_{1+4}$ (100°C) of the obtained acrylic rubber K was 27.

Charged monomer mixture

| | |
|---|---|
| Ethyl acrylate [EA] | 48.4 parts by weight |
| Butyl acrylate [BA] | 30.0 parts by weight |
| Methoxyethyl acrylate [MEA] | 20.0 parts by weight |
| Mono n-butyl fumarate [MBF] | 1.6 parts by weight |

Example 11

The acrylic rubbers H, I, J and K obtained in Examples 8 to 10 and Comparative Example 3 were subjected to a heating test at 150°C (3 hours) in the air, and the Mooney viscosity $PML_{1+4}$ (100°C) before and after the test and the stress relaxation factor MSR (100°C) were measured. The results obtained are shown in the following Table 3.

Table 3

| Acrylic rubber | H | I | J | K |
|---|---|---|---|---|
| Amount of compound [I-A] charged (parts by weight) | 0.50 | 0.20 | 0.10 | 0 |
| Before test | | | | |
| $PML_{1+4}$ | 26 | 28 | 28 | 27 |
| MSR | 0.081 | 0.073 | 0.063 | 0.061 |
| After heating test at 150°C for 3 hours | | | | |
| $PML_{1+4}$ | 31 | 33 | 30 | 26 |
| MSR | 0.078 | 0.074 | 0.062 | 0.281 |

Example 12

A copolymerization reaction was performed in the same manner as in Example 1, except that the following charged monomer mixture was used, thereby obtaining acrylic rubber L. The Mooney viscosity $PML_{1+4}$ (100°C) of the obtained acrylic rubber L was 37.

Charged monomer mixture

| | |
|---|---|
| Ethyl acrylate [EA] | 97.0 parts by weight |
| Vinyl chloroacetate [VCA] | 2.5 parts by weight |
| Compound [I-A] of Reference Example 1 | 0.5 parts by weight |

Example 13

A copolymerization reaction was performed in the same manner as in Example 1, except that the following charged monomer mixture was used, thereby obtaining acrylic rubber M. The Mooney viscosity $PML_{1+4}$ (100°C) of the obtained acrylic rubber M was 38.

Charged monomer mixture

| | |
|---|---|
| Ethyl acrylate [EA] | 97.3 parts by weight |
| Vinyl chloroacetate [VCA] | 2.5 parts by weight |
| Compound [I-A] of Reference Example 1 | 0.2 parts by weight |

Example 14

A copolymerization reaction was performed in the same manner as in Example 1, except that the following charged monomer mixture was used, thereby obtaining acrylic rubber N. The Mooney viscosity $PML_{1+4}$ (100°C) of the obtained acrylic rubber N was 36.

Charged monomer mixture

| | |
|---|---|
| Ethyl acrylate [EA] | 97.4 parts by weight |
| Vinyl chloroacetate [VCA] | 2.5 parts by weight |
| Compound [I-A] of Reference Example 1 | 0.1 parts by weight |

Comparative Example 4

A copolymerization reaction was performed in the same manner as in Example 1, except that the following charged monomer mixture was used, thereby obtaining acrylic rubber P. The Mooney viscosity $PML_{1+4}$ (100°C) of the obtained acrylic rubber P was 36.

Charged monomer mixture

| | |
|---|---|
| Ethyl acrylate [EA] | 97.5 parts by weight |
| Vinyl chloroacetate [VCA] | 2.5 parts by weight |

Example 15

The acrylic rubbers L, M, N and P obtained in Examples 12 to 14 and Comparative Example 4 were subjected to a heating test at 150°C, 3 hours in the air, and the Mooney viscosity $PML_{1+4}$ (100°C) before and after the test and the stress relaxation factor MSR (100°C) were measured. The results obtained are shown in the following Table 4.

Table 4

| Acrylic rubber | L | M | N | P |
|---|---|---|---|---|
| Amount of compound [I-A] charged (parts by weight) | 0.50 | 0.20 | 0.10 | 0 |
| Before test | | | | |
| $PML_{1+4}$ | 36 | 36 | 38 | 37 |
| MSR | 0.081 | 0.073 | 0.063 | 0.061 |

(continued)

| | | | | |
|---|---|---|---|---|
| After heating test at 150°C for 3 hours | | | | |
| $PML_{1+4}$ | 34 | 34 | 38 | 8 |
| MSR | 0.064 | 0.066 | 0.080 | 0.538 |

Example 16

| | |
|---|---|
| Acrylic rubber A | 100 parts by weight |
| SRF carbon black (Seast GS, produced by Tokai Carbon Co., Ltd.) | 70 parts by weight |
| Stearic acid (TST, produced by Miyoshi Oil & Fat Co., Ltd.) | 1 part by weight |
| Polyoxyethylene stearyl ether phosphate (Phosphanol RL-210, produced by Toho Chemical Industry Co., Ltd.) | 0.5 parts by weight |
| Stearyl amine (Farmin 80S, produced by Kao Corporation) | 1 part by weight |
| Crosslinking accelerator (Vulcofac ACT55, produced by Safic-Alcan) | 1 part by weight |
| Hexamethylenediamine carbamate | 0.6 parts by weight |

(Cheminox AC6F, produced by Unimatec Co., Ltd.)

Among the above components, the acrylic rubber A, SRF carbon black, stearic acid, and polyoxyethylene stearyl ether phosphate were mixed with a Banbury mixer. The obtained mixture and the other components were mixed using an open roll, thereby obtaining an acrylic rubber composition.

This composition was subjected to primary crosslinking at 180°C for 8 minutes and oven crosslinking (secondary crosslinking) at 175°C for 4 hours using a 100 ton press molding machine, thereby obtaining a sheet-like crosslinked product with a thickness of about 2 mm and a diameter of about 29 mm, and a cylindrical crosslinked product with a height of about 12.5 mm.

The physical characteristics of crosslinked product of the acrylic rubber composition was measured in the following manner.

Normal state physical properties: according to JIS K6251 corresponding to ISO 37 and JIS K6253 corresponding to ISO 7619-1
Air heating aging test: according to JIS K6257 corresponding to ISO 188
(190°C: 100 hours, 200 hours, 300 hours, 400 hours, 500 hours)
Compression set test: according to JIS K6262 corresponding to ISO 815-1
(175°C: 70 hours)

Comparative Example 5

In Example 16, the acrylic rubber D was used in place of the acrylic rubber A.

Comparative Example 6

In Comparative Example 5, 0.5 parts by weight of the compound (b) produced in Reference Example 1 was further mixed with acrylic rubber D together with other additives in the composition preparation step.

Comparative Example 7

In Comparative Example 5, 0.5 parts by weight of the compound [I-A] was further mixed with acrylic rubber D together with other additives in the composition preparation step.

Following Table 5 shows the results obtained in the above Example 16 and Comparative Examples 5 to 7.

Table 5

| Measurement results | | Ex. 16 | Comp. Ex. 5 | Comp. Ex. 6 | Comp. Ex. 7 |
|---|---|---|---|---|---|
| Normal state physical properties | | | | | |
| Hardness | (Duro A) | 70 | 70 | 69 | 70 |
| 100% modulus | (MPa) | 5.1 | 5.6 | 6.0 | 5.5 |
| Strength at break | (MPa) | 15.5 | 15.3 | 15.4 | 14.6 |
| Elongation at break | (%) | 270 | 240 | 240 | 260 |
| Heat aging test (190°C, 100 hours) | | | | | |
| Hardness change | (Duro A) | +10 | +7 | +6 | +9 |
| Rate of change in 100% modulus | (%) | +27 | -38 | -42 | -24 |
| Rate of change in strength at break | (%) | -9 | -47 | -49 | -29 |
| Rate of change in elongation at break | (%) | -20 | +7 | +6 | -1 |
| Heat aging test (190°C, 200 hours) | | | | | |
| Hardness change | (Duro A) | +9 | +9 | +11 | +10 |
| Rate of change in 100% modulus | (%) | +10 | -29 | -37 | -38 |
| Rate of change in strength at break | (%) | -25 | -59 | -59 | -58 |
| Rate of change in elongation at break | (%) | -14 | -10 | -9 | -3 |
| Heat aging test (190°C, 300 hours) | | | | | |
| Hardness change | (Duro A) | +15 | +20 | +23 | +21 |
| Rate of change in 100% modulus | (%) | -2 | | | +7 |
| Rate of change in strength at break | (%) | -49 | -56 | -55 | -57 |
| Rate of change in elongation at break | (%) | -22 | -66 | -62 | -55 |
| Heat aging test (190°C, 400 hours) | | | | | |
| Hardness change | (Duro A) | +17 | +25 | +24 | +23 |
| Rate of change in 100% modulus | (%) | +10 | | | |
| Rate of change in strength at break | (%) | -54 | -29 | -32 | -37 |
| Rate of change in elongation at break | (%) | -37 | -86 | -86 | -82 |
| Heat aging test (190°C, 500 hours) | | | | | |
| Hardness change | (Duro A) | +21 | +25 | +28 | +24 |
| Rate of change in 100% modulus | (%) | +41 | | | |
| Rate of change in strength at break | (%) | -52 | +11 | +5 | +0 |
| Rate of change in elongation at break | (%) | -60 | -96 | -96 | -95 |
| Compression set test (175°C, 70 hours) | (%) | 21 | 20 | 20 | 21 |

Example 17

In Example 16, the following component was used.

| | |
|---|---|
| Acrylic rubber L | 100 parts by weight |
| FEF carbon black (Seast GSO) | 60 parts by weight |
| Stearic acid (TST) | 1 part by weight |
| Fatty acid sodium (Na-soap, produced by Kao Chemical Corporation) | 3 parts by weight |
| Fatty acid potassium (Nonsoul SK-1,produced by NOF Corporation) | 0.25 parts by weight |
| Sulfur (precipitated sulfur, produced by Hosoi Chemical Industry Co., Ltd.) | 0.3 parts by weight |

The physical characteristics of the acrylic rubber composition crosslinked product were measured in the following manner.

Normal state physical properties: according to JIS K6251 and JIS K6253
Air heating aging test: according to JIS K6257 (175°C: 300 hours)

Oil dipping - air heating aging combined test:
an oil (IRM 903 oil) dipping test was performed at 150°C for 168 hours according to JIS K6258 corresponding to ISO 1817, an air heating aging test was further preformed at 175°C for 300 hours according to JIS K6257 corresponding to ISO 188.
Compression set test: according to JIS K6262 corresponding to ISO 815-1
(175°C: 70 hours)

Example 18

In Example 17, the acrylic rubber M was used in place of the acrylic rubber L.

Example 19

In Example 17, the acrylic rubber N was used in place of the acrylic rubber L.

Comparative Example 8

In Example 17, the acrylic rubber P was used in place of the acrylic rubber L.

Comparative Example 9

In Comparative Example 8, 2.0 part by weight of 4,4'-bis(α,α-dimethylbenzyl)diphenylamine (Nocrac CD) was further added.

Following Table 6 shows the results obtained in the above Examples 17 to 19 and Comparative Examples 8 to 9.

Table 6

| Measurement results | | Ex. 17 | Ex. 18 | Ex. 19 | Comp. Ex. 8 | Comp. Ex. 9 |
|---|---|---|---|---|---|---|
| Normal state physical properties | | | | | | |
| Hardness | (Duro A) | 69 | 68 | 67 | 69 | 66 |
| 100% modulus | (MPa) | 6.0 | 6.0 | 5.7 | 5.5 | 5.2 |
| Strength at break | (MPa) | 15.9 | 15.6 | 15.3 | 14.9 | 14.5 |
| Elongation at break | (%) | 280 | 290 | 300 | 280 | 290 |
| Heat aging test (175°C, 300 hours) | | | | | | |
| Hardness change | (Duro A) | +9 | +8 | +9 | +10 | +8 |
| Rate of change in 100% modulus | (%) | -34 | -58 | -61 | -42 | -64 |
| Rate of change in strength at break | (%) | -49 | -72 | -78 | -72 | -74 |
| Rate of change in elongation at break | (%) | -3 | +25 | +27 | -19 | +67 |
| Oil dipping-heat aging combined test | | | | | | |
| Hardness change | (Duro A) | +9 | +10 | +10 | +17 | +17 |
| Rate of change in 100% modulus | (%) | -26 | -55 | -56 | -13 | -25 |
| Rate of change in strength at break | (%) | -49 | -71 | -76 | -66 | -69 |
| Rate of change in elongation at break | (%) | -18 | +8 | +3 | -60 | -51 |
| Compression set test(150°C, 70 hours) | (%) | 32 | 33 | 31 | 32 | 32 |

Example 20

In a 200 ml borosilicate glass flask, 30 g of styrene, 30 mg of the compound [I-A] and 90 mg of azobisisobutyronitrile were charged, and freeze deaeration was repeated three times, followed by a polymerization reaction at 80°C for 24 hours. The content was slightly yellow at the beginning of the polymerization, but became a colorless solid at the end of the polymerization. This solid was dissolved in toluene and taken out from the reaction vessel. The monomer polymerization rate determined by an evaporation-to-dryness method was 96%. The toluene solution of the copolymer was heated on a hot plate at 150°C for 1 hour to remove volatile components. Further, vacuum drying was performed at 100°C for 1.5 hours, thereby obtaining a resinous copolymer Q of styrene and the compound [I-A].

Furthermore, part of the toluene solution of the copolymer taken out from the reaction vessel was added to

methanol to precipitate the copolymer, followed by drying under reduced pressure at 60°C for 3 hours. The copolymer sample obtained in this manner was used for $^1$H-NMR and GPC measurements.

The copolymer Q fraction compositions of compound [I-A] and styrene were 0.037 mol% and 99.963 mol%, respectively, determined by $^1$H-NMR (400 MHz, $CDCl_3$, $\delta$ ppm) using the following formulas.

$\alpha$: integral value of signal at 3.1-3.4 ppm
$\beta$: integral value of signal at 5.9-7.7 ppm

$$\text{Compound [I-A] (mol\%)} = 500 \times \alpha / (5\alpha+3\beta)$$

$$\text{Styrene (mol\%)} = 100 - \text{compound [I-A] (mol\%)}$$

Moreover, the weight fraction compositions of compound [I-A] and styrene were 0.09 wt% and 99.91 wt%, respectively, determined by the following formulas.

$$\text{Compound [I-A] (wt\%)} = (\text{compound [I-A] (mol\%)} \times 239.34 \times 100) / [\text{compound [I-A] (mol\%)} \times 239.34 + (\text{styrene (mol\%)}) \times 104.15]$$

$$\text{styrene (wt\%)} = 100 - \text{compound [I-A] (wt\%)}$$

The weight average molecular weight (Mw) and Z average molecular weight (Mz) were measured by gel permeation chromatography (GPC) according to the following measurement conditions. The Mw, Mz and Mz/Mw were $3.56\times10^5$, $1.84\times10^6$ and 5.16, respectively.

Device: HPLC System 20A, produced by Shimadzu Corporation
Column: Shodex GPC KF-807L×4
Detector: RI
Measurement temperature: 40°C
Sample concentration: 0.4%
Carrier (THF) flow rate: 1.0 ml/min

Example 21

In Example 20, the amount of the compound [I-A] was changed to 15 mg, thereby obtaining a resinous copolymer R of styrene and the compound [I-A]. The monomer polymerization rate was 95%, and the weight fraction compositions were 0.05 wt.% for the compound [I-A] and 99.95 wt.% for styrene. Further, the Mw, Mz and Mz/Mw were $2.55\times10^5$, $1.06\times10^6$ and 4.17, respectively.

Example 22

In Example 20, 30 mg of the compound [I-B] was used in place of the compound [I-A], thereby obtaining a resinous copolymer S of styrene and the compound [I-B]. The monomer polymerization rate was 96%. The Mw, Mz and Mz/Mw were $3.33\times10^5$, $1.64\times10^6$ and 4.92, respectively.

An attempt to determine the copolymerization amount of the compound [I-B] in the obtained copolymer from the following formula using $^1$H-NMR (400 MHz, $CDCl_3$, $\delta$ ppm) was impossible because no signals were detected at 3.1 to 3.4 ppm. This is presumably due to the loss of methyl groups on the nitrogen atoms caused by thermal history. However, in view of the weight fraction compositions of the charging amounts of styrene and the compound [I-B], the weight fraction of the compound [I-B] in the copolymer is estimated to be within the range of 0.05 to 0.10 wt.%.

$\alpha$: integral value of signal at 3.1-3.4 ppm
$\beta$: integral value of signal at 5.9-7.7 ppm

$$\text{Compound [I-B] (mol\%)} = 500 \times \alpha / (5\alpha+3\beta) \text{ (mol\%)}$$

$$\text{Styrene (mol\%)} = 100 - \text{compound [I-B] (mol\%)}$$

Comparative Example 10

In Example 20, the compound [I-A] was not used, thereby obtaining a resinous styrene homopolymer T. The styrene polymerization rate was 96%. The Mw, Mz and Mz/Mw were $3.36\times10^5$, $1.67\times10^6$ and 4.97, respectively.

Reference Example 3

To a toluene solution of the styrene homopolymer obtained in Comparative Example 10, 0.1 parts by weight of 2,6-di-tert-butyl-4-methylphenol (BHT: produced by Tokyo Chemical Industry Co., Ltd.) as a phenol-based antioxidant was added based on 100 parts by weight of solid matters, after which volatile components were removed and vacuum drying was performed under the same conditions as in Example 20, thereby obtaining a styrene resin composition.

Reference Example 4

In Reference Example 3, the same amount (0.1 parts by weight) of Irganox 1010 produced by BASF was used in place of 2,6-di-tert-butyl-4-methylphenol as a phenol-based antioxidant, thereby obtaining a styrene resin composition.

Comparative Example 11

In Reference Example 3, the same amount (0.1 parts by weight) of the compound [I-A] was used in place of 2,6-di-tert-butyl-4-methylphenol as a phenol-based antioxidant, thereby obtaining a styrene resin composition.

Comparative Example 12

In Reference Example 3, the same amount (0.1 parts by weight) of the compound (a) of Reference Example 1 was used in place of 2,6-di-tert-butyl-4-methylphenol as a phenol-based antioxidant, thereby obtaining a styrene resin composition.

Example 23

In Example 20, the amount of styrene was changed to 27.0 g, and 3.0 g of methyl methacrylate was newly used, thereby obtaining a resinous copolymer U of styrene, methyl methacrylate, and the compound [I-A]. The monomer polymerization rate was 94%, and the weight fraction compositions except for the compound [I-A] were 90.63 wt.% for styrene and 9.37 wt.% for methyl methacrylate. The Mw, Mz and Mz/Mw were $2.57\times10^5$, $9.48\times10^6$ and 3.69, respectively. Since signals at 3.1 to 3.4 ppm derived from the compound [I-A] overlapped with signals derived from methyl methacrylate, the weight fraction of the compound [I-A] could not be determined.

Comparative Example 13

In Example 23, the compound [I-A] was not used, thereby obtaining a resinous styrene-methyl methacrylate copolymer V. The monomer polymerization rate was 95%, and the weight fraction compositions were 90.63 wt.% for styrene and 9.37 wt.% for methyl methacrylate. The Mw, Mz and Mz/Mw were $2.56\times10^5$, $9.96\times10^5$ and 3.9, respectively.

Example 24

In Example 20, the amount of styrene was changed to 27.0 g, and 3.0 g of acrylonitrile was newly used, thereby obtaining a resinous copolymer W of styrene, acrylonitrile and the compound [I-A]. The monomer polymerization rate was 97%, and the weight fraction compositions were 90.14 wt.% for styrene, 9.77 wt.% for acrylonitrile and 0.09 wt.% for the compound [I-A]. The Mw, Mz and Mz/Mw were $3.75\times10^5$, $2.04\times10^6$ and 5.45, respectively.

Comparative Example 14

In Example 24, the compound [I-A] was not used, thereby obtaining a resinous copolymer X. The monomer polymerization rate was 91%, and the weight fraction compositions were 90.23 wt.% for styrene and 9.77 wt.% for acrylonitrile. The Mw, Mz and Mz/Mw were $3.90\times10^5$, $1.77\times10^6$ and 4.55, respectively.

Example 25

In Example 20, the amount of styrene was changed to 29.4 g, and 0.6 g of methacrylic acid was newly used, thereby obtaining a resinous copolymer Y of styrene, methacrylic acid and the compound [I-A]. The monomer polymerization rate was 87%, and the weight fraction compositions were 98.15 wt.% for styrene, 1.78 wt.% for methacrylic acid and 0.07 wt.% for the compound [I-A]. The Mw, Mz and Mz/Mw were $4.96\times10^5$, $2.14\times10^6$ and 4.32, respectively.

Comparative Example 15

In Example 25, the compound [I-A] was not used, thereby obtaining a resinous copolymer Z of styrene and methacrylic acid. The monomer polymerization rate was 91%, and the weight fraction compositions were 98.06 wt.% for styrene and 1.94 wt.% for methacrylic acid. The Mw, Mz and Mz/Mw were $4.06\times10^5$, $1.85\times10^6$ and 4.51, respectively.

Example 26

In a 200 ml borosilicate glass flask, 15 g of methyl methacrylate, 15 g of ethyl acrylate, 30 mg of the compound [I-A], 30 mg of azobisisobutyronitrile and 30 g of ethyl acetate were charged, and freeze deaeration was repeated three times, followed by a polymerization reaction at 70°C for 24 hours. The monomer polymerization rate determined by an evaporation-to-dryness method was 91%. The ethyl acetate solution of the copolymer was heated on a hot plate at 150°C for 0.5 hours to remove volatile components. Further, volatile components were removed under reduced pressure (100°C, 1 hour) and normal pressure (150°C, 2 hours), thereby obtaining a resinous copolymer ME1 of methyl methacrylate, ethyl acrylate and the compound [I-A].

Comparative Example 16

In Example 26, the polymerization reaction and devolatilization operation were similarly carried out without using the compound [I-A], thereby obtaining a resinous copolymer ME2. The monomer polymerization rate was 87%.

The resins or resin compositions obtained in each of the Examples, Comparative Examples and Reference Examples were used to measure the melt flow rate (MFR), yellowness index (YI) and thermal stability.

MFR: According to JIS K7210-1 corresponding to ISO 1133-1 (2011), MFR was measured at 200°C at a load of 5.0 kg (provided that MFR was measured at loads of 7.2 kg and 13.7 kg in Example 25 and Comparative Example 15, and Example 26 and Comparative Example 16, respectively).

YI: After heating a plate (30 mm x 50 mm, 1 mm in thickness) in an air circulation oven at 150°C for a predetermined period of time, YI was measured according to ASTM D1925 corresponding to ISO 13468-1 (2019) using a colorimeter (ZE6000, produced by Nippon Denshoku Industries Co., Ltd.).

Thermal stability: The upper edge of a circular plate with a diameter of 30 mm and a thickness of 2 mm was held with clips (clipping width: 15 mm x length: 5 mm) and heated in an air circulation oven at 140°C. The time taken for the test piece to gradually melt and deform as thermal oxidative degradation progressed, and to release from the clips and fall off was measured.

Following Tables 7 to 11 show the results obtained in the above Examples 20 to 26, Comparative Examples 10 to 16 and Reference Examples 3 to 4.

Table 7

| Resin | | Ex. 20<br>Q | Ex. 21<br>R | Ex. 22<br>S |
|---|---|---|---|---|
| Amount of compound [I-A] charged | (parts by weight) | 0.10 | 0.05 | - |
| Amount of compound [I-B] charged | (parts by weight) | - | - | 0.10 |
| Melt flow rate | (g/10 min) | 8.6 | 14.9 | 8.9 |
| YI before test | | -2.7 | -3.7 | -0.3 |
| YI after 150°C heating test | | | | |
| 1 day | | 0.5 | -0.7 | 0.7 |
| 2 days | | -3.2 | -1.0 | 1.5 |
| 3 days | | 1.1 | 1.4 | 3.6 |
| 4 days | | 1.6 | 1.8 | 4.4 |
| 5 days | | -2.7 | -2.9 | 0.2 |
| 6 days | | 0.9 | -0.3 | 2.3 |

(continued)

| | | | | |
|---|---|---|---|---|
| YI after 150°C heating test | | | | |
| Test piece falling time | (hours) | 280 | 260 | 170 |

Table 8

| Resin | | Comp. Ex. 10 T | Ref. Ex. 3 T | Ref. Ex. 4 T | Comp. Ex. 11 T | Comp. Ex. 12 T |
|---|---|---|---|---|---|---|
| Amount of compound [I-A] charged | (parts by weight) | - | - | - | - | - |
| Amount of compound [I-B] charged | (parts by weight) | - | - | - | - | - |
| [Compounding agents (parts by weight)] | | | | | | |
| BHT | | - | 0.1 | - | - | - |
| Irganox 1010 | | - | - | 0.1 | - | - |
| Compound [I-A] | | - | - | - | 0.1 | |
| Compound (a) (Reference Example 1) | | - | - | - | - | 0.1 |
| Melt flow rate | (g/10 min) | 23.8 | 10.2 | 11.2 | 10.2 | 19.1 |
| YI before test | | -2.7 | -3.3 | -2.7 | -3.2 | 3.3 |
| YI after 150°C heating test | | | | | | |
| 1 day | | 9.6 | 0.6 | 0.4 | 9.0 | 0.1 |
| 2 days | | 17.0 | -2.4 | -1.3 | 16.6 | 2.8 |
| 3 days | | 30.0 | 1.9 | 1.8 | 20.9 | 2.8 |
| 4 days | | 36.4 | 2.4 | 0.4 | 22.5 | 5.1 |
| 5 days | | 46.7 | -0.4 | -2.2 | 24.8 | 6.6 |
| 6 days | | 56.5 | 3.9 | 0.0 | 27.3 | 6.2 |
| Test piece falling time | (hours) | 20 | 240 | 200 | 180 | 200 |

Table 9

| Resin | | Ex.23 U | Comp. Ex.13 V | Ex.24 W | Comp. Ex.14 X |
|---|---|---|---|---|---|
| Amount of compound [I-A] charged | (parts by weight) | 0.10 | - | 0.10 | |
| Melt flow rate | (g/10 min) | 9.0 | 22.6 | 13.7 | 21.1 |
| YI before test | | -0.9 | -2.0 | -3.4 | -1.5 |
| YI after 150°C heating test | | | | | |
| 1 day | | 0.6 | 6.7 | 0.4 | 32.1 |
| 2 days | | -0.4 | 13.7 | 3.0 | 48.0 |
| 3 days | | 0.0 | 18.5 | 3.1 | 55.9 |
| 4 days | | 2.1 | 23.2 | 5.8 | 60.3 |
| 5 days | | 3.9 | 35.4 | 8.1 | 64.0 |
| 6 days | | 3.8 | 42.2 | 6.3 | 81.9 |
| Test piece falling time | (hours) | 70 | 20 | 130 | 20 |

Table 10

| Resin | | Ex. 25 Y | Comp. Ex. 15 Z |
|---|---|---|---|
| Amount of compound [I-A] charged | (parts by weight) | 0.10 | - |
| Melt flow rate [load of 7.2 kg] | (g/10 min) | 10.9 | 18.5 |

(continued)

| Resin | | Ex. 25<br>Y | Comp. Ex. 15<br>Z |
|---|---|---|---|
| YI before test | | -6.8 | -2.2 |
| YI after 150°C heating test | | | |
| 1 day | | -3.7 | 13.6 |
| 2 days | | -3.3 | 35.8 |
| 3 days | | 2.5 | 52.7 |
| 4 days | | 6.8 | 66.1 |
| 5 days | | 3.3 | 65.4 |
| 6 days | | 6.1 | 110.9 |
| Test piece falling time | (hours) | >500 | 80 |

Table 11

| Resin | | Ex. 26<br>ME 1 | Comp. Ex. 16<br>ME2 |
|---|---|---|---|
| Amount of compound [I-A] charged | (parts by weight) | 0.10 | - |
| Melt flow rate [load of 13.7 kg] | (g/10 min) | 6.4 | 13.7 |
| Test piece falling time | (hours) | 50 | 20 |

The above results reveal the following.

(1) Examples 1 to 15 show that the copolymers in which the phenothiazine derivative compound [I] is copolymerized are stabilized against oxidative degradation.
(2) A comparison between Example 16 and Comparative Examples 5 to 7, and a comparison between Example 20 and Comparative Examples 11 and 12 show that the copolymerization of the phenothiazine derivative compound [I] with other polymerizable unsaturated monomers results in more excellent oxidative degradation prevention effects.
(3) A comparison between Examples 17 to 19 and Comparative Examples 8 and 9 shows that in the synthetic polymer materials in which the phenothiazine-based derivative compound of the present invention is copolymerized, antioxidant components are less likely to be extracted from molded products due to oil dipping, and their functions are maintained (Fig. 3).
(4) The use amount of the phenothiazine derivative compound [I], which is a copolymerizable antioxidant, can be significantly reduced in comparison with conventional additive type antioxidants.
(5) The copolymerization of the phenothiazine derivative compound [I] can suppress the increase in the melt viscosity (melt flow rate) of the resinous polymer due to the thermal history of the post-polymerization treatment step (Examples 20 to 26).
(6) The resinous molded products can be prevented from yellowing under thermal oxidative degradation conditions (Examples 20 to 25).
(7) Under thermal oxidative degradation conditions, the deformation etc. of the resinous molded products caused by thermal oxidative degradation can be suppressed, and the functions and physical properties inherent in the resin can be maintained for a long period of time (Examples 20 to 26).

## Claims

1. A method for using a phenothiazine derivative compound represented by the general formula:

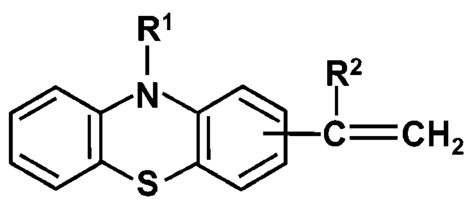

〔I〕

(wherein $R^1$ is a monovalent aliphatic hydrocarbon group having 1 to 10 carbon atoms, $R^2$ is a hydrogen atom or a methyl group), to prevent the oxidative degradation of a synthetic polymer material produced by the addition polymerization of a polymerizable unsaturated monomer, by copolymerizing the phenothiazine derivative compound [I] with the constituting polymerizable unsaturated monomer during the production of the synthetic polymer material.

**2.** The method for using a phenothiazine derivative compound according to claim 1, wherein the phenothiazine derivative compound [I] is 3-ethenyl-10-methyl-10H-phenothiazine.

**3.** The method for using a phenothiazine derivative compound according to claim 1, wherein the phenothiazine derivative compound [I] is 2-(1-methylethenyl)-10-methyl-10H-phenothiazine.

[Fig. 1]

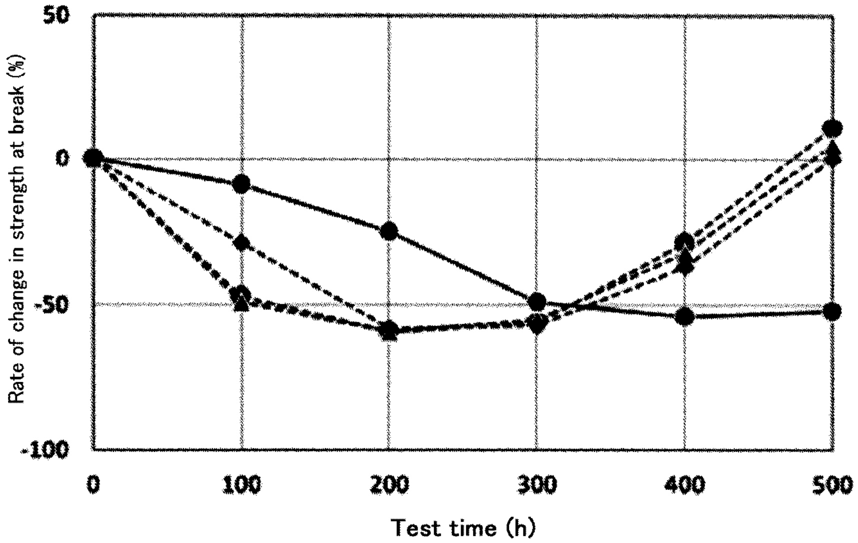
50
0
-50
-100
Rate of change in strength at break (%)
0
100
200
300
400
500
Test time (h)

[Fig. 2]

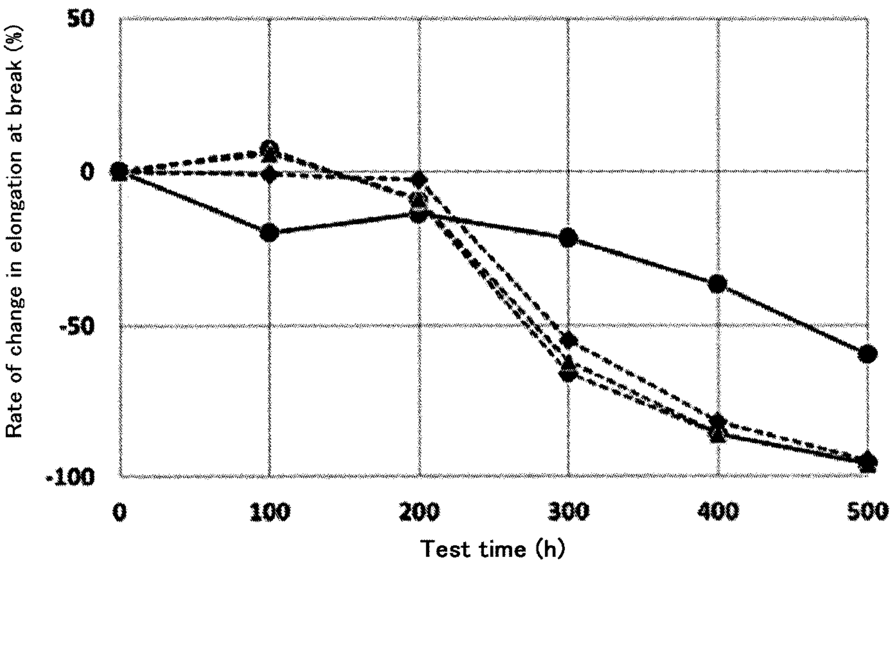
50
0
-50
-100
Rate of change in elongation at break (%)
0
100
200
300
400
500
Test time (h)

[Fig. 3]

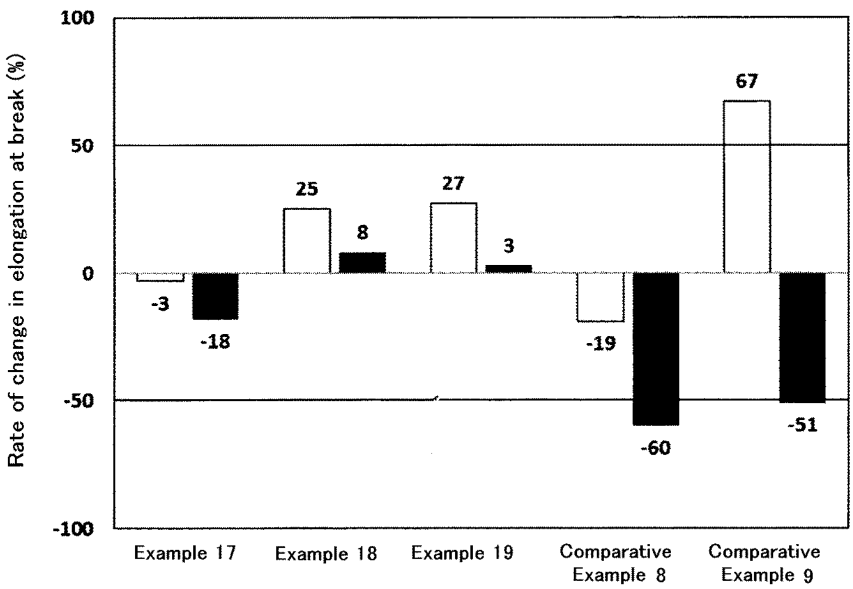
Rate of change in elongation at break (%)
100
50
0
-50
-100
67
25
8
27
3
-3
-18
-19
-60
-51
Example 17
Example 18
Example 19
Comparative Example 8
Comparative Example 9

## INTERNATIONAL SEARCH REPORT

International application No.
**PCT/JP2024/018488**

**A. CLASSIFICATION OF SUBJECT MATTER**

***C08F 228/06***(2006.01)i
FI: C08F228/06

According to International Patent Classification (IPC) or to both national classification and IPC

**B. FIELDS SEARCHED**

Minimum documentation searched (classification system followed by classification symbols)

C08F228/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 60-115681 A (NOZAKURA, Shiyunichi) 22 June 1985 (1985-06-22) claims, page 2, lower right column, page 3, lower right column to page 4, upper left column, page 5, example 2 | 1-2<br>3 |
| A | JP 2022-185177 A (UNIMATEC CO., LTD.) 14 December 2022 (2022-12-14) Whole document | 1-3 |
| A | JP 2022-90304 A (UNIMATEC CO., LTD.) 17 June 2022 (2022-06-17) entire text | 1-3 |
| A | WO 2022/049872 A1 (UNIMATEC CO., LTD.) 10 March 2022 (2022-03-10) entire text | 1-3 |
| A | WO 2023/021832 A1 (UNIMATEC CO., LTD.) 23 February 2023 (2023-02-23) entire text | 1-3 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/018488**

**C. DOCUMENTS CONSIDERED TO BE RELEVANT**

| Category* | Citation of document, with indication, where appropriate, of the relevant passages | Relevant to claim No. |
|---|---|---|
| P, X | WO 2023/223643 A1 (UNIMATEC CO., LTD.) 23 November 2023 (2023-11-23)<br>claims, paragraph [0030], examples | 1-3 |
| P, X<br>P, A | WO 2023/100982 A1 (UNIMATEC CO., LTD.) 08 June 2023 (2023-06-08)<br>claims, paragraphs [0034], [0103], examples | 1-2<br>3 |
| P, A | WO 2024/018764 A1 (UNIMATEC CO., LTD.) 25 January 2024 (2024-01-25)<br>entire text | 1-3 |

Form PCT/ISA/210 (second sheet) (July 2022)

**INTERNATIONAL SEARCH REPORT**
**Information on patent family members**

International application No.
**PCT/JP2024/018488**

| Patent document cited in search report | Publication date (day/month/year) | Patent family member(s) | Publication date (day/month/year) |
|---|---|---|---|
| JP 60-115681 A | 22 June 1985 | (Family: none) | |
| JP 2022-185177 A | 14 December 2022 | (Family: none) | |
| JP 2022-90304 A | 17 June 2022 | (Family: none) | |
| WO 2022/049872 A1 | 10 March 2022 | US 2023/0323086 A1<br>claims, examples<br>EP 4209487 A1<br>CN 116134079 A | |
| WO 2023/021832 A1 | 23 February 2023 | CN 117813350 A | |
| WO 2023/223643 A1 | 23 November 2023 | (Family: none) | |
| WO 2023/100982 A1 | 08 June 2023 | (Family: none) | |
| WO 2024/018764 A1 | 25 January 2024 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4264106 A
- JP 5230132 A
- JP 2009209268 A


### Non-patent literature cited in the description


- *Rubber Chem.Technol.*, 1972, vol. 45, 204
- *Rubber Chem.Technol.*, 1973, vol. 46, 106
- *Rubber Chem.Technol.*, 1979, vol. 52, 883
- *Organic Letters*, 2021, vol. 23, 4564
- *Energy Environ.Sci.*, 2017, vol. 10, 2334-2341
- *Macromolecules*, 1987, vol. 20, 978
- *Russian Journal of applied chem.*, 2003, vol. 76, 1327